(19)

**Europäisches Patentamt**
**European Patent Office**
**Office européen des brevets**

(11) **EP 1 683 305 B1**

(12) **EUROPEAN PATENT SPECIFICATION**

(45) Date of publication and mention
of the grant of the patent:
**13.01.2010 Bulletin 2010/02**

(51) Int Cl.:
*H04L 12/28* (2006.01)    *H04L 12/56* (2006.01)
*H04W 88/02* (2009.01)

(21) Application number: **03818974.2**

(22) Date of filing: **11.11.2003**

(86) International application number:
**PCT/SE2003/001740**

(87) International publication number:
**WO 2005/046133 (19.05.2005 Gazette 2005/20)**

(54) **ADAPTING PLAYOUT BUFFER BASED ON AUDIO BURST LENGTH**

ANPASSUNG EINES PLAYOUT-PUFFERS AUF DER BASIS DER AUDIO-BURST-LÄNGE

ADAPTATION DU TAMPON DE REPRODUCTION EN FONCTION DE LA LONGUEUR DES RAFALES AUDIO

(84) Designated Contracting States:
**AT BE BG CH CY CZ DE DK EE ES FI FR GB GR HU IE IT LI LU MC NL PT RO SE SI SK TR**

(43) Date of publication of application:
**26.07.2006 Bulletin 2006/30**

(73) Proprietor: **TELEFONAKTIEBOLAGET LM ERICSSON (publ)**
**164 83 Stockholm (SE)**

(72) Inventors:
• **JÖNSSON, Tomas**
**S-975 98 Lule (SE)**

• **HANNU, Hans**
**S-976 31 Lule (SE)**

(74) Representative: **Kühn, Friedrich Heinrich et al**
**Ericsson AB**
**Patent Unit Radio Networks**
**Torshamnsgatan 23**
**164 80 Stockholm (SE)**

(56) References cited:
**EP-A2- 1 278 353     US-A1- 2003 112 758**
**US-A1- 2003 128 686     US-B1- 6 452 950**

**Description**

TECHNICAL FIELD

The present invention generally refers to playout buffers in communications systems, and in particular to size variable playout buffers in such systems.

BACKGROUND

A trend in cellular communications systems of today is the emergence of new communications services provided to users. Services traditionally associated with computer networks are now, e.g. by means of the Internet protocol (IP), also available for cellular communications systems. Another class of new services is the so-called "push to" services, e.g. push to talk services.

Push to talk over Cellular (PoC) or instant talk (over cellular) is a communications service that basically functions as a "walkie-talkie" service, but implemented in a cellular telecommunications system. A PoC enabled handset or user equipment is then equipped with a dedicated PoC (hardware or software) button. As for a traditional walkie-talkie, when the button is pressed, the user handset connects directly with the handsets of a particular friend, with whom the user wants to communicate. It is also possible to connect to and communicate with a group of people having access to PoC enabled handsets.

The principle of communication behind the PoC service is very simple, just to push the button and start talking. Since the user typically always has direct access to the service (based on a subscription with a service provider, e.g. the network provider, offering PoC services) without dial-up and other time-consuming procedures, PoC calls can be started directly with individual users or groups of users after pressing the button. In other words, the call connection is almost instantaneous.

PoC is currently a one-way (half-duplex or semi-duplex) communications service. Thus, for PoC services network resources are thereby reserved only one-way for the duration of talk bursts instead of two-way for an entire call session. Furthermore, while one person speaks, the other(s) listen. The turns to speak are typically granted by pressing the PoC button on a first come, first served basis.

A problem with implementing PoC services in cellular communications system is that the radio conditions may change over time due to e.g. the mobility of the user handset, changes in interference level experienced by the receivers, etc. As a consequence, the provided bit-rate for the PoC service may change during the communication session. Furthermore, the network delay in the transmission of data packets comprising the bursty PoC speech data may vary a lot. In order to level out these changes in bit-rate and delay, a playout buffer or jitter buffer may be provided in the user handsets. These playout buffers are memories that temporarily store received PoC associated packets and thereby can compensate for variations in bit-rate (network delay) by (temporarily) delaying the packets in the buffer before they are rendered (played back) for the user. Thus, the playout buffer is used to make sure that the user is supplied with a constant playout (rendering) rate, despite variations in the bit-rate and/or network delay over the radio channel.

The size of the playout buffer determines how big variations in bit-rate (network delay) that can be compensated, while still maintaining an acceptable conversational, real time quality in terms of interactivity. However, the procedure of determining the playout buffer size is a delicate process that requires a careful compromise between conflicting goals. On one hand a large playout buffer size is desired to cope with big variations in the bit-rate (network delay). On the other hand, it is preferred to have a very small buffer size to get a higher degree of perceived interactivity when users talk with each other.

In US Patent No. 6,452,950 [1], an adaptive jitter buffer is disclosed. The size of this jitter buffer is used to enable a smooth data feed to an application without excessive delays in a packet communications system. The jitter buffer size is varied based on an estimated variation of packet transmission delay derived from the times of arrival of stored packets. A variance buffer stores variances of the times of arrival of the stored packets, and the estimated variation of packet transmission delay is derived from these stored variances. The size of the jitter buffer is then changed during periods of discontinuous packet transmission.

US Patent Application No. 2002/0007429 [2] discloses an adaptive playout buffer arranged in a receiver in a packet communications system. When the receiver has received at least one packet, its delay (jitter) is measured and compared with some predefined value. Depending on the result of that comparison, the playout buffer size is adapted, such to optimize the transfer of packets according some predefined criteria.

In an article by Fujimoto et al [3], an algorithm for determining the size of an adaptive playout buffer for streaming applications is disclosed. The algorithm determines the buffer size based on measured transmission delays of packets arrived in the buffer. Once a new buffer size value is determined, the algorithm adapts the size prior to the streaming session. This size value is kept for the duration of the streaming session.

Although the above-identified documents [1-3] disclose different adaptive playout or jitter buffers, none of those buffers are adapted for PoC services and the characteristic needs of such services.

SUMMARY

The present invention overcomes these and other drawbacks of the prior art arrangements.

It is a general object of the present invention to provide a size variable playout buffer.

It is another object of the invention to provide a playout buffer, the size of which is adaptable based on audio burst length.

Yet another object of the invention is to provide a playout buffer arranged in user equipment for temporarily storing data packets comprising bursty audio data for the purpose of compensating for variations in bit-rate and transmission delay in a communications system.

It is a further object of the invention to provide a size variable playout buffer adapted for usage in a Push to talk over Cellular (PoC) enabled user equipment in a communications system supporting PoC and instant talk services.

These and other objects are met by the invention as defined by the accompanying patent claims.

Briefly, the present invention involves a size variable playout buffer arranged in user equipment for temporarily storing bursty audio data packets or frames received over a communications system. This temporary storage and size variability of the buffer enables compensation for variations in bit-rate and transmission delay in the communications system and enables a smooth data feed rate to an application or unit playing back (rendering) the data packets in the user equipment.

The size of the playout buffer according to the present invention is controlled or adapted based on audio burst length. This should be compared to prior art buffer arrangements, as discussed in the background section, where the buffer size is varied based on a transmission delay. According to the invention, the data packets comprise bursty audio data that can be any audio data generated in bursts or in a bursty way in an audio application associated or connected with a transmitter. This bursty audio data is then transmitted in the data packets over or through the communications system to the receiving user equipment comprising the playout buffer of the invention. Thus, audio data, e.g. voice or speech, is generated during audio bursts, e.g. talk or speech bursts.

PoC enabled user equipment typically comprises a PoC (hardware or software) button. When this button is pressed on the user equipment, the user can start to talk with one (one-to-one communication) or several (one-to-many communication) of his friends, i.e. the audio burst starts. When the user releases the PoC button or presses a PoC stop button the audio burst stops and another user can start talking. In addition, when the audio burst starts (pressing the PoC button) an audio burst start identifier is typically inserted in the first, or one of the first, data packets comprising (the sampled and coded) speech. Correspondingly, when the audio burst stops (release of the PoC button or press a stop button) an audio burst stop identifier is typically inserted in the last data packet of that audio burst. These burst start and stop identifier can then be used for estimating the audio burst length. For example, the number of data packets housing the audio data of that audio burst or the number of bits that these data packets comprise, as may be determined based on the identifiers, can represent the audio burst length. However, the audio burst length can be determined without usage of a start and stop identifier.

In PoC services, the user perception of interactivity depends on this length of the audio bursts. For a short audio burst (a few words (seconds)), even a short delay will degrade the "real time feeling". As a consequence, the size of the playout buffer should preferably be kept small to prevent a too large delay before the talk is played back for the listening user. However, for long audio bursts (several sentences (seconds or minutes)) delay will not be noticed to the same degree. However, jitter effects and changes in provided bit-rate will become more disturbing. Thus, a relatively large playout buffer size is preferred to compensate for these effects and changes. In addition, if the buffer size is too small data packets may under some unfortunate situations become lost if packets arrive at the playout buffer faster than they are released therefrom.

Once an audio burst length is determined or estimated, the playout buffer size may be controlled (changed) in response to this length. Alternatively, the buffer size may be adapted based on several audio burst length values, such as an average length of M audio bursts, where M is a positive integer. The number M of audio burst lengths to be employed for the averaging and consequently for the buffer size adaptation may be predefined. However, the number M may be dynamically set, preferably based on the audio burst length of one or multiple audio bursts. Thus, for long audio bursts, M is preferably a small number, whereas for short audio bursts M can be a larger number.

In a preferred embodiment of the invention, the playout buffer size is controlled based on a weighted average of (M) audio burst lengths. In such a case, the weight for a "new" audio burst, i.e. an audio burst, the data packets of which being received fairly recently, is preferably larger than the weight for an "old" audio burst, i.e. an audio burst, the data packets of which being received at an earlier occasion.

The buffer size may be linearly changed based on the audio burst length (average audio burst length or weighted audio burst length). Alternatively, the playout buffer size could be stepwisely increased for increasing audio burst lengths. The buffer size may also be smoothly increased in response to increasing burst length values, possibly asymptoticly reaching a maximum (minimum) buffer size for long (short) burst lengths.

The playout buffer size may be changed during an on-going communication session, i.e. there is no need to wait until the end of the communications session before adapting the buffer size. As a consequence, the buffer size can be adapted as the character of the talk changes during the session, i.e. the audio burst lengths changes. For example, initially the communication between users could be conducted with each user in turn talking a few words (short audio burst lengths). As the communication proceeds, the time length each or one user talks may increase to several tens of seconds (long audio burst lengths). The present invention can then be employed for quickly adapting the playout buffer size based on these changes in the conversation character (audio burst lengths). Consequently, most often the playout buffer has a length that is adapted for the current communication situation and therefore provides a good quality of service (QoS) to the users both in form of interactivity and reliability. However, the playout buffer size is preferably not changed during an audio burst since then problems with rebuffering may arise. In addition, during a one-to-many (PoC) communication, it may be possible to use a different playout buffer size for the audio bursts received from different users.

The invention offers the following advantages:

- Compensates for variations in bit-rate and transmission delay;
- Adapted for PoC services;
- Provides smooth rendering (playback) of audio data for users despite changes in the current communications conditions;
- Improves user-perceived "real-time feeling";
- May adapt the playout buffer size during an on-going communications session to cope with changes in the communications characteristics;
- Provides optimal compromise between interactivity and reliability; and
- Provides high reliability for long audio bursts.

Other advantages offered by the present invention will be appreciated upon reading of the below description of the embodiments of the invention.

SHORT DESCRIPTION OF THE DRAWINGS

The invention together with further objects and advantages thereof, may best be understood by making reference to the following description taken together with the accompanying drawings, in which:

Fig. 1 is a schematic overview of an embodiment of a communications system according to the present invention;

Fig. 2 is a flow diagram of a playout buffer controlling method according to the present invention;

Fig. 3 is a flow diagram of an embodiment illustrating additional steps of the buffer controlling method of Fig. 2;

Fig. 4 is a flow diagram of another embodiment illustrating additional steps of the buffer controlling method of Fig. 2;

Fig. 5 is a flow diagram of yet another embodiment illustrating additional steps of the buffer controlling method of Fig. 2;

Fig. 6 is diagram illustrating the principle with weights for the determination of an average audio burst length according to the present invention;

Fig. 7 is a flow diagram illustrating additional steps of the buffer controlling method of Fig. 2 for an embodiment with an average audio burst length determination;

Fig. 8 is a diagram illustrating the principle with different functions for determining the playout buffer size based on the audio burst length;

Fig. 9 is a schematic block diagram of user equipment according to the present invention;

Fig. 10 is a schematic block diagram of a Push to talk over Cellular (PoC) client according to the present invention;

Fig. 11 is a schematic block diagram illustrating an embodiment of the playout buffer size (PBS) controller of Fig. 10 in more detail;

Fig. 12 is a schematic block diagram illustrating an embodiment of the packet analyzer of Fig. 11 in more detail;

Fig. 13 is a schematic block diagram illustrating another embodiment of the packet analyzer of Fig. 11 in more detail;

Fig. 14 is a schematic block diagram illustrating yet another embodiment of the packet analyzer of Fig. 11 in more detail; and

Fig. 15 is a schematic block diagram illustrating an embodiment of the length determiner of Fig. 11 in more detail.

DETAILED DESCRIPTION

Throughout the drawings, the same reference characters will be used for corresponding or similar elements.

The present invention relates to a size variable or adaptive playout or jitter buffer and algorithms for controlling the size of such a playout buffer.

The size variable playout buffer is typically implemented in a receiver or receiving node in a communications system, typically in user equipment, user terminal or mobile unit. The operation of the playout buffer is to temporarily store data packets or frames comprising bursty audio data in the user equipment before the data packets are released therefrom and forwarded to an application or unit that performs the actual playback or rendering of the audio data. The object of the playout buffer in the user equipment is then to smooth out the data feed rate to the application in order to compensate for variations in provided bit-rate, transmission delays of the data packets, etc. in the communications system.

In the present invention the bursty audio data can be any audio data generated in bursts or in a bursty way in an audio application associated or connected with a transmitter. This bursty audio data is then transmitted in data packets over or through the communications system to the receiving node comprising the playout buffer of the invention. Thus, audio data, e.g. voice or speech, is generated during audio bursts, e.g. talk or speech bursts.

The size of playout buffer according to the present invention is adapted based on audio (talk) burst length. This should be compared to prior art buffer arrangements, as discussed in the background section, where the buffer size is varied based on a transmission delay.

In the following the present invention will be described with reference to a communications system supporting Push to talk over Cellular (PoC) or instant talk services with a size variable playout buffer implemented in user equipment having a PoC client. However, the invention is not limited to such PoC supporting systems and user equipment with PoC clients. Generally, the size variable playout buffer and algorithms of the invention can be employed in any communications system where audio data is generated in a bursty manner and transmitted in data packets or frames from an audio generating or recording application (associated with a transmitter) over the communications system to a receiver comprising the playout buffer and a unit controlling the buffer size based on the audio burst length. This includes wired and wireless communications system, e.g. radio communications system, communications systems supporting Internet Protocol (IP) telephony, etc.

For increasing the understanding of the invention, in the following audio burst and audio burst length are exemplified with talk burst and talk burst length. However, the invention is applicable to other forms of audio than talk (speech or voice) and is therefore not limited thereto.

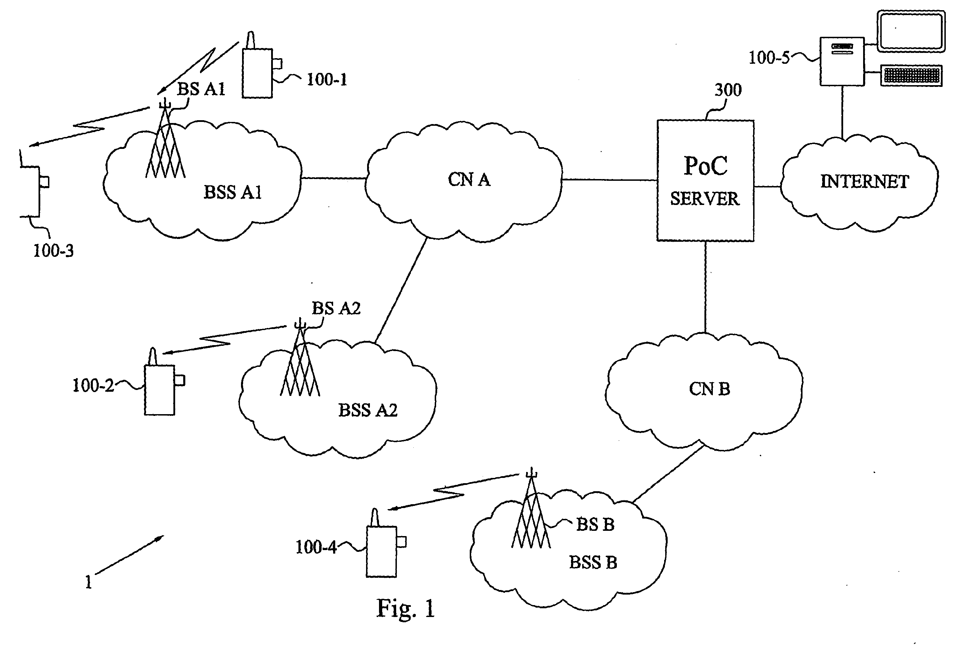

Fig. 1 is a schematic overview of a communications system 1 according to the present invention providing PoC services. The system 1 could be a (mobile) cellular communications system, such as Global System for Mobile communications (GSM), General Packet Radio Service (GPRS) / GSM, Enhanced GPRS (EGPRS), Enhanced Data rates for GSM Evolution (EDGE), Universal Mobile Telecommunications System (UMTS) or Code Division Multiple Access (CDMA) systems, such as Wideband CDMA (W-CDMA), CDMA 2000 and other CDMA systems.

In addition to the typical network architecture with a radio access network comprising a number of base station systems BSS A1, BSS A2; BSS B with base stations BS A1, BS A2; BS B and core network CN A; CN B, the radio communications system 1 comprises a PoC (application) server 300. This PoC application server 300 typically handles call set-up signaling for PoC calls and the flow control of PoC traffic. Furthermore, real-time routing of IP packets carrying the bursty talk (audio) data to the correct receiving user equipment 100-2; 100-3; 100-4; 100-5 is managed by the PoC server 300. The server 300 can also provide interface to the network operator's provisioning and network managing system and create charging detail records, used as a basis for billing of the PoC service. The PoC server 300 preferably comprises, or has access to, a user database that stores information of e.g. provisioned users, their access rights, preconfigured group memberships and authentication information. The PoC server 300 may viewed as a stand-alone equipment in the communications system 1. In such a case, the communications networks provided and managed by network operators may be connected to this PoC server 300. Alternatively, the PoC server 300 may constitute a portion of a network operator's infrastructure. In this case, the PoC server 300 may be implemented in an IP multimedia subsystem frame of each communication network. The PoC server 300 could alternatively be provided in the core network (CN A; CN B) and/or in a base station system (BSS A1, BSS A2; BSS B) of the network operator.

In the figure, five PoC supporting user handsets or equipment 100-1 to 100-5 are illustrated. The user equipment 100-1 to 100-5 comprises a PoC client implemented therein and is equipped with a PoC hardware or software button used for performing push to talk conversation. The users (owners) of the equipment 100-1 to 100-5 typically have a service agreement, e.g. subscription, with the PoC service provider (often the network operator). The user equipment 100-1 to 100-4 can be a (conventional) mobile unit or telephone configured with a PoC client. Also a computer or laptop 100-b connected to the PoC server 300 over Internet is possible. Alternatively, the user equipment 100-1 to 100-4 could be a dedicated PoC handset, i.e. lacks traditional cellular mobile telephone functionalities, where the available communications services for the user are limited to PoC services, i.e. no "regular calls". The PoC service agreement can then be manifested in an identity module arranged in the PoC handset, similar to Subscriber Identity Module (SIM) for GSM supporting user equipment.

In a PoC session, a first user wants to communicate with a friend (one-to-one communication) through PoC communication. The user typically selects the friend to communicate with from an address book or PoC book in his user equipment 100-1. This address book preferably also informs, i.e. provides presence information, the user, which of his friends that presently are connected to the communications system 1 and therefore are able to initiate a PoC communication. The user then presses a PoC button on his equipment 100-1. This PoC button could be a hardware button or implemented in software in the user equipment 100-1. When the button is pressed the user can start to talk with his friend, i.e. a talk burst starts. When the user releases the button, or presses a PoC stop button, the talk burst ends. During the talk burst, i.e. during the speech, the talk (speech) is sampled, speech coded and packed into a number or data packets, typically Adaptive Multi Rate (AMR) packets or frames, as is known in the art. These AMR packets are then often temporarily stored in a speech or transmitter buffer in the user equipment 100-1. Before transmission to the friend's user equipment 100-2 over the radio communications system 1, the AMR packets or frames are packed into IP packets. The actual number of AMR packets per IP packet typically depends on the acceptable level of overhead, the used IP version and/or on header compression. Furthermore, Real-time Transport Protocol (RTP) is preferably used in the GPRS access and core network. The transmitted IP packets are then transmitted from the user equipment 100-1 through base station BS A1, base station system BSS A1 and core network CN A to the PoC server 300. The server then routs the packets to the intended user equipment 100-2 (through the core network CN A, base station system BSS A2 and base station BS A2). Once received, the AMR packets are temporarily stored in the playout buffer at the receiving user equipment 100-2 before they are released to the application that actually plays back (renders) the talk data for the user.

For PoC services it is possible to talk with one or several (one-to-many) users 100-2; 100-3 connected to the network, but also users 100-4; 100-5 connected to another communications network (wireless or wired).

When a user presses the PoC button for the purpose of starting to talk, the PoC client in his user equipment preferably inserts a talk burst start identifier or bit in an AMR packet, typically the first AMR packet of a talk burst. This start identifier indicates when a new talk burst is started. Correspondingly, when the user releases the button or presses a stop button, a talk burst stop identifier or bit is preferably inserted in an AMR packet. This stop identifier indicates that the current talk burst is ended. The length of an audio burst can then be determined based on the talk burst start and stop identifier.

The corresponding time length of a talk burst can vary greatly from a few seconds or parts of a second, i.e. the user says one or a few words, to several tens of seconds or even minutes.

In PoC services, the user-perception of interactivity depends on this length of the talk bursts. For a short talk burst (a few words (seconds)), even a short delay will degrade the "real-time feeling". As a consequence, the size of the playout buffer should preferably be kept small to prevent a too large delay before the talk is played back for the listening user. However, for long talk bursts (several sentences (seconds or minutes)) delay will not be noticed to the same degree. However, jitter effects and changes in provided bit-rate will become more disturbing. Thus, a relatively large playout buffer size is preferred to compensate for these effects and changes. In addition, if the buffer size is too small data packets may in some situations become lost if packets arrive at the playout buffer faster than they are released therefrom.

Thus, according to the invention the playout buffer size is controlled or adapted based on the talk (audio) burst length.

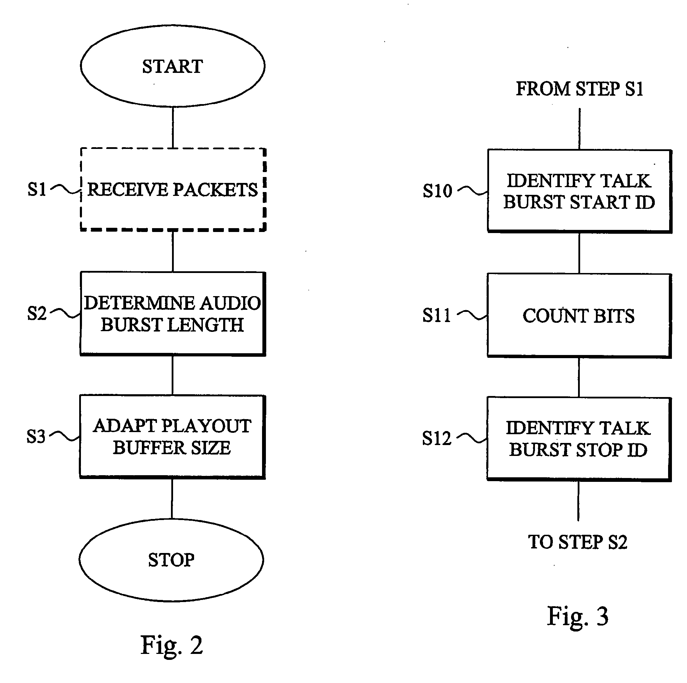

Fig. 2 is a flow diagram illustrating a method of controlling a size variable playout buffer according to the present invention. The method starts in step S1, where the user equipment housing the playout buffer receives data packets comprising bursty talk or speech (audio) data from a transmitter, e.g. another user equipment, over a communications system. The packets are temporarily stored in the buffer before release or forwarding to an application that performs the actual rendering or playout of the talk data. In step S2, the audio (talk) burst length is determined. This length is preferably determined by analysis of information associated with the received data packets, such as based on the above-mentioned talk (audio) burst start and stop identifier. Step S3 controls the playout buffer by adapting the buffer size based on the determined audio (talk) burst length. Generally, for a long burst length the buffer size should be large and for a short burst length the buffer size should be small. The method then ends.

According to the present invention, the playout buffer size may be changed during an on-going PoC session, i.e. there is no need to wait until the end of the communications session before adapting the buffer size. As a consequence, the buffer size can be adapted as the character of the talk changes during the session, i.e. the talk burst lengths changes. For example, initially the PoC communication between users could be conducted with each user in turn talking a few words (short talk burst lengths). As the communication proceeds, the time length each or one user talks may increase to several tens of seconds (long talk burst lengths). The present invention can then be employed for quickly adapting the playout buffer size based on these changes in the conversation character (talk burst lengths). Consequently, most often the playout buffer has a length that is adapted to the current communication situation and therefore provides a good quality of service (QoS) to the users in terms of interactivity and reliability. However, the playout buffer size is preferably not changed during a talk burst since then problems with rebuffering may arise. Thus, the buffer size may preferably be adapted between talk bursts during a communication session.

Fig. 3 is a flow diagram illustrating additional steps of the buffer controlling method of Fig. 2. Once the data packets are received in step S1 of Fig. 2, step S10 identifies a talk burst start identifier or bit(s) in one of the packets. This identifier enables identification of where a new talk burst is started. In step S11, the number of bits in the received data packets are counted until a talk burst stop identifier or bit(s) is found in one of the packets in step S12. Note that for an extremely short talk burst, the start identifier and stop identifier may actually be located in the same data packet. However, in most cases, the length of a talk burst is such that the speech (audio) data generated during the burst does not fit into a single data packet but has to be packed into several data packets. In such a case, step S11 preferably counts the total number of bits in these intermediate packets. In addition, the bits following the start identifier in the packet with this start identifier and the bits preceding the stop identifier in the packet with this stop identifier could also be counted and added to the counted number of bits for the intermediate packets. Thus, this embodiment of the invention basically counts the total number of bits that a talk burst comprises. The method then continues to step S2 in Fig. 2, where the talk burst length ($L_{TB}$) is determined or estimated based on the counted number of bits:

$$L_{TB} = \text{function(number of bits)}. \qquad (1)$$

The burst length can then be expressed as a function of the counted number of bits. However, it is possible that the talk burst length is simply represented by this number of bits, i.e. $L_{TB} = X$ bits, where X is a positive integer.

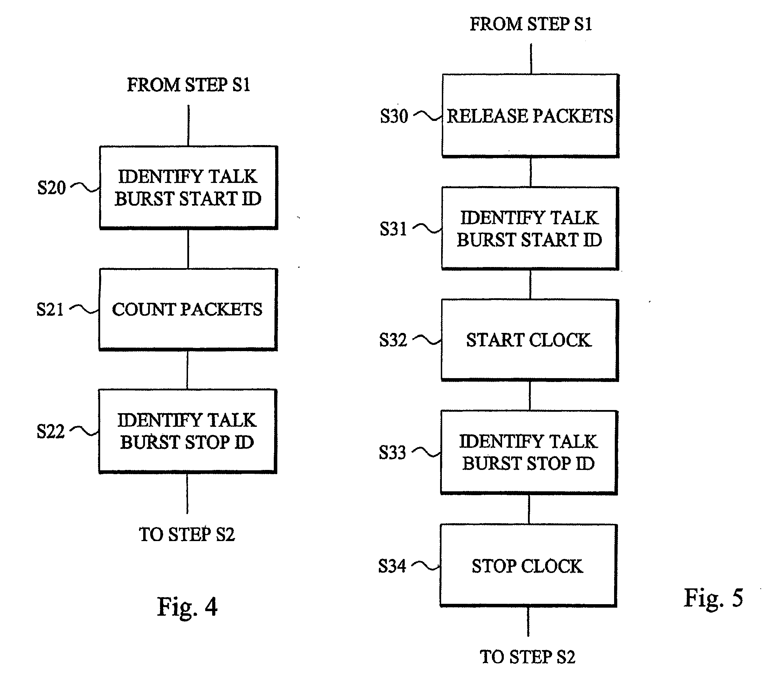

Fig. 4 is a flow diagram illustrating additional steps of the buffer controlling method of Fig. 2. Once the data packets are received in step S1 of Fig. 2 the method continues to step S20. This step corresponds to step S10 of Fig. 3 and is not further discussed. In step S21, the number of data packets received from a packet comprising the talk burst start identifier to a packet comprising the talk burst stop identifier are counted. In one embodiment, the total number of counted packets only comprises any intermediate packets, i.e. the packets received in order between the start identifier comprising packet to the stop identifier comprising packet. In another embodiment, the packet comprising the start identifier and/ or the packet comprising the stop identifier are also included in this determined total number of packets. Thus, this embodiment of the invention basically counts the number of data packets comprising (bursty) talk data and being generated during the duration of a talk burst. Step S22, corresponds to step S12 of Fig. 3 and is not further discussed. The method then continues to step S2 of Fig. 2, where the talk burst length is determined or estimated based on the counted number of data packets:

$$L_{TB} = \text{function(number of packets)}. \qquad (2)$$

The burst length can then be expressed as a function of the counted number of data packets. However, it is possible that the talk burst length is simply represented by this number of packets, i.e. $L_{TB} = X$ packets, where X is zero or a positive integer.

Note that for some applications the amount of talk data that goes into a data packet is known, for example an AMR frame or packet typically houses at most 20 ms of speech. In such a case, the talk burst length can be expressed in time units (number of packets x length of packet in seconds) instead of a number of packets.

Fig. 5 is a flow diagram illustrating additional steps of the buffer controlling method of Fig. 2. Once the data packets are received in step S1 of Fig. 2 the method continues to step S30. In this step S30, data packets that are temporarily stored in the playout buffer are released therefrom (and provided to the playback or rendering application). Step S31 identifies the released data packet that comprises the talk burst start identifier. When this start identifier comprising packet is released from the playout buffer a clock is started in step S32. Once the packet comprising the talk burst stop identifier is released from the buffer in step S33, this clock is stopped in step S34. The time length determined by the clock is then used as a representation of the talk burst length. Thus, this embodiment of the invention basically determines the total time length of a talk burst. The method then continues to step S2 of Fig. 2, where the talk burst length is determined or estimated based on the determined total time length:

$$L_{TB} = \text{function(time length)}. \qquad (3)$$

The burst length can then be expressed as a function of the determined time length. However, it is possible that the talk burst length is simply represented by this time length, i.e. $L_{TB} = X$ s, where X is a positive number.

It may be possible that a data packet comprises both an audio (talk) burst start identifier (and/or stop identifier) and bursty audio data. However, the burst start or stop identifier may be provided in a dedicated packet or frame that does not comprise any bursty audio data. The talk burst length could then be estimated by calculating the number of intermediate data packets between the dedicated start identifier comprising packet and the dedicated stop identifiers comprising packet, or the (total) number of bits in these intermediate data packets.

Note that the IP (RTP) packet(s) comprising the (AMR) data packets including talk data of a first talk burst are typically received by the user equipment in time order. Then there is typically a (short or long) time lapse before a possible reception of data packets comprising talk data of a second talk burst. It is thus possible for the user equipment or a PoC client in the user equipment to identify the data packets housing talk data of a given talk burst without usage of a talk burst start and stop identifier. The talk burst length could then be determined based on counting the number of (AMR) data packets of a talk burst or the number of bits in all the data packets of the talk burst. The first received AMR data packet of a given talk burst could, according to another embodiment of the invention, be viewed as a talk burst start identifier and the last received AMR data packet of that talk burst could then be viewed as a talk burst stop identifier.

The talk burst length can be determined, e.g. according to any of the embodiments of Fig. 3 to 5, in the receiving user equipment, such as in the PoC client of the user equipment. However, the burst length can alternatively be determined in the user equipment transmitting the packets with bursty talk data, e.g. according to the embodiment of Fig. 3 or 4, such as in the PoC client of this transmitting user equipment. In such a case, information of this determined talk burst length value is transmitted to the receiving user equipment. It is also possible that the talk burst length is determined in some other unit in the communications system than in the receiving (or transmitting) user equipment. The determined length value is then sent to the user equipment for allowing adaptation of the playout buffer size.

In a general embodiment of the invention the playout buffer size (PBS) may be determined based on one determined or estimated talk burst length ($L_{TB}$) value:

$$PBS = f(L_{TB}), \qquad (4)$$

where f is some (mathematical) function. However, in order to give a more stable algorithm, the playout buffer size may be determined based on several (M) talk burst length values:

$$PBS = f(L_{TB}^{i+M-1}, ..., L_{TB}^{i}). \qquad (5)$$

Thus, the talk burst lengths are filtered over a certain amount of time resulting in a determination of the buffer size based on multiple burst length values, or a predefined number (M) of talk bursts could be used in the determination of the buffer size. These multiple length values may originate from talk bursts from one user or from several users (one-to-many communication). Thus, the buffer size could adapted based the talk burst length values of e.g. the M most recently received talk bursts, irrespectively whether they originate from one or multiple user equipment.

In this embodiment of the invention, the PoC client of the user equipment preferably comprises a memory for storing determined talk burst length values. Then, the buffer size can be determined by selecting M burst length values from this storage, preferably the M most recent length values. A typical example of a suitable function f for the calculation of the buffer size according to equation (5) is an averaging function:

$$PBS = \frac{\sum_{i=1}^{M} L_{TB}^{i}}{M}.\qquad\qquad (6)$$

The number (M) of talk burst lengths to be included in the determination of the playout buffer size according to equation (5) or (6) may be a predefined fixed value. However, there may be problems if this number M is relatively large, e.g. 10, and if the burst lengths are long. In such a case, it will take considerably long time before the (ten) burst lengths can be determined and, thus, before a new buffer size value is calculated. This means that the time before the buffer size can be adapted (changed) is long, which might result in a loss of user-perception of interactivity. The parameter M is therefore preferably dynamically set. In a preferred embodiment of the invention the value of this parameter M is determined based on the talk burst length:

$$M = g(L_{TB}).\qquad\qquad (7)$$

Generally, if the talk burst lengths are relatively short, M may be large, e.g. equal to or larger than 5, whereas if the burst lengths are long a small value of M should be used. The parameter M may be determined based on the length of the latest talk burst or of the latest two or three (or some other positive integer) talk bursts, e.g. based on the average length of the two or three latest talk bursts. Alternatively, the parameter M could be determined based on the average burst length of talk bursts received (received data packets comprising bursty talk data) during a few seconds, e.g. during 15 seconds. If during this time period only a single talk burst is received, possibly with a characteristic burst length exceeding 15 s, M is determined based on this single talk burst length. However, if several (short) talk bursts are received during the 15 seconds, their average length value is used for the calculation of the parameter M.

The function $g$ of equation (7) could be any decreasing function with one or several talk burst length values as input parameter. For example, a possible function $g(x)$ could be $g(x) = \dfrac{p}{x}$, where $p$ is some positive number and $x$ is the (average) talk burst length value. Other possible functions $g(x)$ include a stepwise decreasing function or a smoothly decreasing function.

The playout buffer size could, alternatively, be determined based on a weighted average of M talk burst lengths:

$$PBS = \frac{\sum_{i=1}^{M} k_{i} L_{TB}^{i}}{M},\qquad\qquad (8)$$

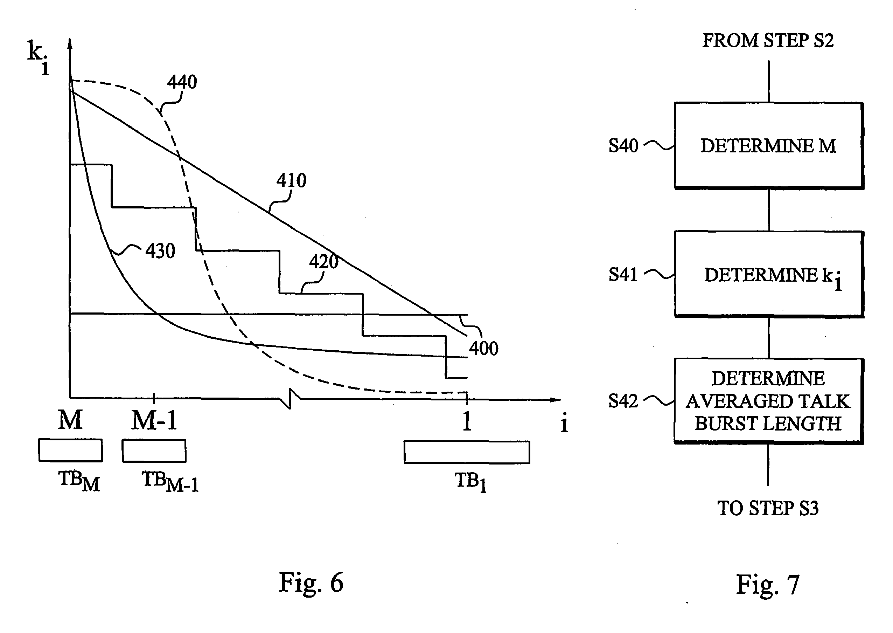

where $k_i$ is a gain constant or weight for each talk burst length. Fig. 6 is a diagram illustrating the principle of using weights. In the figure, the y-axis corresponds to the weight value $(k_i)$ and the x-axis corresponds to time or the received talk bursts (totally M bursts, where $TB_j$ is received earlier than $TB_{j+1}$, j=1, ..., M-1). Line 400 represents the situation when all the M talk bursts are weighted equally (an arithmetic average), i.e. $k_i$ is the same constant for all i=1, ..., M. However, it may be advantageously to weight the talk burst lengths differently. For example, the length of a more recently received talk burst, e.g. $TB_M$, may be weighted higher (more) than the length of an earlier received talk burst, e.g. $TB_1$. This is particularly advantageous when the character of the conversation is changing from typically long (short) talk bursts to short (long) talk bursts. Curves 410 to 440 (curve 410 with linearly different weights, curve 420 with stepwisely different weights and curves 430 and 440 with smoothly different weights) represent the situation with employing different weights for different talk bursts and where $k_{i+1} > k_i$, where i=1, ..., M-1.

Fig. 7 is a flow diagram illustrating additional steps of the playout buffer controlling method according to the present invention. Once the talk burst length is determined in step S2, the parameter M, i.e. the number of talk burst length values to use in the length averaging, is determined in step S40, preferably based on a determined talk burst (average) length. In the next step S41, weight values are determined for the M talk burst lengths. Step S42 then calculates a weighted average talk burst length. The method continues to step S3 of Fig. 2, where the playout buffer size is adapted based on the calculated weighted average length value.

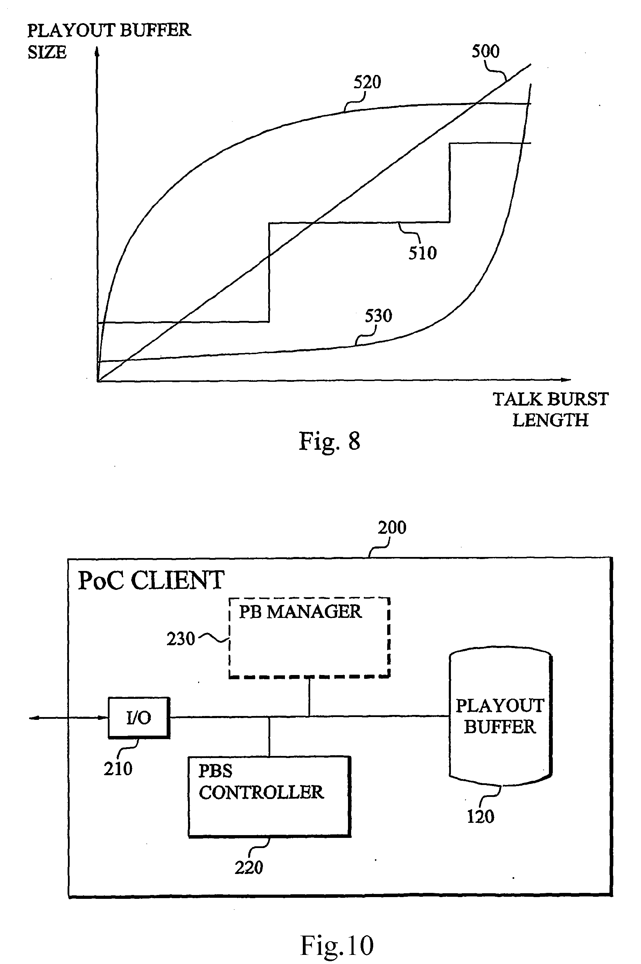

With reference to the diagram of Fig. 8, different functions *f(x)* can be used for the determination of the playout buffer size. The y-axis corresponds to the buffer size and the x-axis corresponds to talk burst length value, e.g. value of a single talk burst length, of an average burst length value or of a weighted average burst length value. Line 500 represents a linear relationship (f(x)=qx, where q is a positive number) between the buffer size and the burst length. Alternatively, a step function can be employed as represented by curve 510. In such a case, the buffer size is stepwisely increased for increasing burst lengths. The function f could also be a smoothly increasing function, such as curve 520 and 530. Also a function exhibiting an asymptotic behavior, i.e. *f(x)*→PBSmm when *x*→∞, see curve 520, or *f(x)*→HPB$_{MIN}$ when *x*→0, see curve 530, is possible. It may also possible to define a function *f* having a minimum buffer size value and/or a minimum size value, i.e. PBS$_{MIN}$ ≤ *f(x)* ≤ PBS$_{MAX}$.

The function f could use additional input parameters in addition to the talk burst length. For example, the playout buffer size may be adapted based both on the determined burst length and on transmission delay for the received data packets.

During a one-to-many (PoC) communication, it may be possible to use a different playout buffer size for the talk bursts (data packets comprising bursty speech (talk) data) received from different users. This scenario is discussed herebelow in connection with an example of a one-to-many communication, where a user currently is communicating with three different users A, B and C, i.e. alternatively receives bursty data packets from these three users. Assume that user A (on average) talks much and each time for long, i.e. long talk bursts, and user B (on average) also talks much but rather shortly, i.e. short talk bursts. However, user C speaks seldom. The received data packets of a talk burst, or at least one data packet of a talk burst, comprise information enabling identification of the user or user equipment, from which the data packets originate. This information could be a user ID in the packet, an IP address or source information in a RTP packet. Then, the user equipment that is (alternately) communicating with the corresponding user equipment of user A, B or C, could determine the playout buffer size based on one or multiple talk burst lengths of talk bursts originating (solely) from user A when communicating with this user, i.e. $PBS = f(L_{TB}^{A})$. Correspondingly, when communicating with user B, the buffer size could be determined based (solely) on length value(s) of talk burst(s) from this user B, i.e. $PBS = f(L_{TB}^{B})$. In addition, if multiple length values are employed for determining a buffer size, the number M of talk bursts to employ could vary depending on if the communication is with user A, B or C. For example, for user A, the number $M_A$ is determined based on the burst length of talk burst(s) from user A, i.e. $M_A = g(L_{TB}^{A})$.

In the present example, this works well for the adaptation of the buffer size and/or the number M based on talk burst lengths associated with user A or B since several such talk bursts have been received from these users. However, for communication with user C, which speaks seldom, it might be possible that only one or a few talk burst are received. Thus, too few talk burst length values $\left( L_{TB}^{C} \right)$ may be present in the user equipment to determine the playout buffer size and/or the number $M_c$ of length values to use in the size calculations. In such a case, also length values of talk bursts originating from other users (A and/or B) may be used in the calculations.

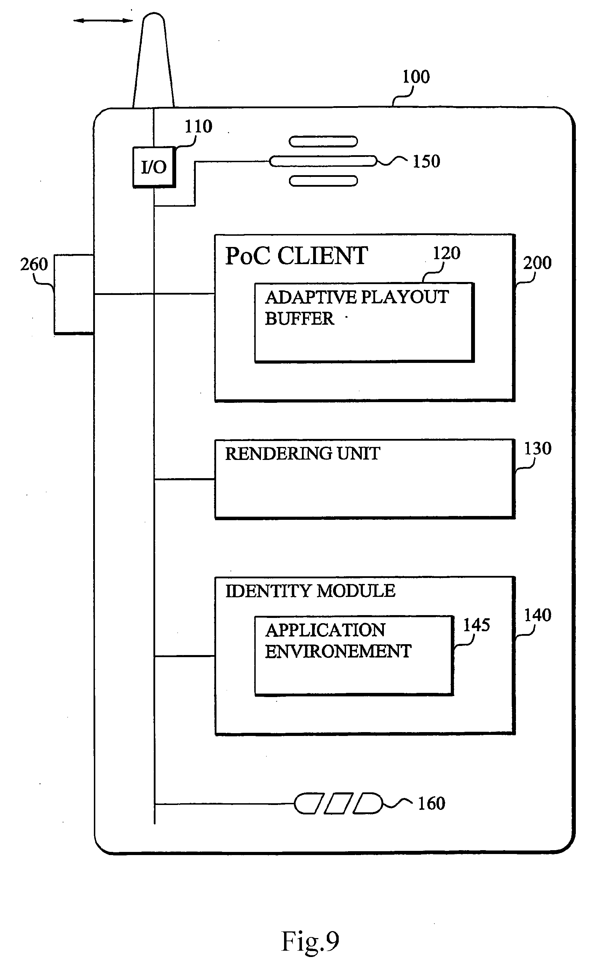

Fig. 9 schematically illustrates a block diagram of an embodiment of user equipment 100 according to the present invention, exemplified with a mobile unit supporting PoC services. Only units relevant for the present invention are illustrated in the figure. The user equipment comprises an input and output (I/O) unit 110 adapted for conducting communications with external units in a communications system. In particular for PoC services, the I/O unit 110 is adapted for transmitting and receiving data packets comprising bursty talk (audio) data. The user equipment 100 also comprises a PoC client 200 according to the invention for adapting the size of an associated adaptive playout buffer 120. A PoC button 260 is also configured in the user equipment 100 for enabling the push to talk service. This PoC button 260 may be a software-implemented button or a hardware-implemented button, e.g. a dedicated hardware PoC button as in the figure. When the user wants to talk with his friend(s), he holds this button 260 pressed and talks. The duration of this button pressing is then a talk burst. When the button 260 is released, his friend (or one of his friends) can talk. Alternatively, it may be possible to press the PoC button 260 once for starting to talk (start of a talk burst) and once more, or press another button, for ending the talk (end of a talk burst).

The user equipment 100 also comprises a size variable playout buffer 120 adapted for temporarily storing received data packets before they are forwarded to an application or rendering unit 130 that performs the playout (rendering) of the talk data for the user. The temporary packet storage smoothes out variations in bit-rate and packet transmission delay throughout the system in order to get as constant playout rate as possible. In Fig. 9, this playout buffer 120 is implemented in the PoC client 200. However, it is anticipated by the invention that the buffer 120 may alternatively be provided elsewhere in the user equipment 100 outside of the PoC client 200. The rendering unit 130 processes the talk (audio) data, which then may be played back for the user by means of a loudspeaker 150. The user equipment 100 is further provided with a microphone 160 or similar audio (speech) recording equipment for generating or recording the speech. Although not illustrated in the figure, the user equipment 100 also comprises functionality for sampling, speech coding and packing the recorded speech. The user equipment 100 could also include a transmitter buffer discussed above in connection with Fig. 1 and an IP (RTP) packet buffer or cache for temporarily storing received IP (RTP) packets before the (AMR) data packets are unpacked therefrom and stored in the playout buffer 120.

The user equipment can also include an identity module 140, such as a standard SIM card used in GSM mobile units or UMTS SIM (USIM). Such an identity module is issued by a service provider, e.g. the network operator, with which the user of the equipment 100 has a service agreement. This identity module 140 could be employed by the PoC server for authentication and provisioning purposes. The PoC client 200 could be implemented as hardware, software or a combination thereof in the user equipment 200. It could also be possible to implement the PoC client 200, or portions thereof in the identity module 140. In such a case, the PoC client 200 could be downloaded over the network, e.g. from the PoC service provider and be implemented in the identity module 140. As the identity module - user equipment interface typically is associated with commands intended to send more or less arbitrary data to the identity module 140 for use therein, e.g. the "ENVELOPE" command for GSM SIM cards, the code for implementing the PoC client 200, or portion thereof, e.g. as a general Java Applet application, could be sent using such commands. The PoC client sent by the command is implemented in an application environment 145 provided by an application toolkit associated with the identity module 140. For a GSM SIM the application environment is provided by SIM Application Toolkit (SAT), whereas the analogue of USIM is provided by UMTS SAT (USAT).

The present invention can be applied to other types of user equipment than the mobile unit illustrated in Fig. 9, for example, but not limited thereto, a dedicated PoC handset, a laptop or a computer.

Fig. 10 is a schematic block diagram illustrating an embodiment of the PoC client 200 of Fig. 9 in more detail. The PoC client optionally comprises an I/O unit 210 to transmit and receive information (e.g. talk burst start and stop identifier) associated with data packets and used for determining the talk burst length. This I/O unit 210 could also receive data packets comprising bursty talk data and then enters by means of a playout buffer (PB) manager 230 the packets in the playout buffer 120. This PB manager 230 also releases the data packets from the buffer 120 when the buffer starts to fill up. The PB 230 may be implemented elsewhere in the user equipment than in the PoC client 200, in particular if the playout buffer 120 is not provided the PoC client 200.

A playout buffer size (PBS) controlling or managing unit 220 is provided in the PoC client 200 for controlling (adapting) the size of the associated playout buffer 120 based on the talk burst length. The PBS controller 220 is preferably configured for adapting the playout buffer size during an on-going PoC session, such as between talk bursts of such a communications session.

The units 210, 220 and 230 of the PoC client 200 may be provided as software, hardware or a combination thereof. The units 210, 220, 230 and 120 may be implemented together in the PoC client 200. Alternatively, a distributed implementation is also possible with some of the units provided elsewhere in the user equipment.

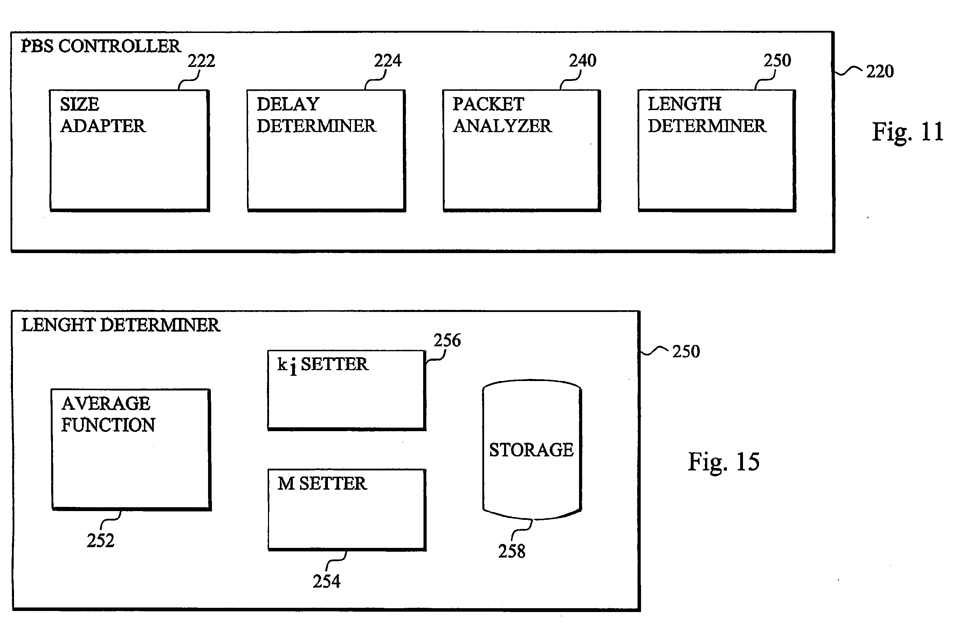

Fig. 11 is a schematic block diagram illustrating an embodiment of the PBS controller or manager 220 of Fig. 10 in more detail. The PBS controller 220 preferably comprises a data packet analyzer 240 configured for analyzing information associated with the received data packets in order to determine the playout buffer length. This packet analyzer 240 is preferably adapted for identifying a talk burst start identifier and talk burst stop identifier in the data packets.

The PBS controller 220 further includes a length determiner 250 that determines the talk burst length, preferably based on input information from the packet analyzer 240. The determined burst length value is then forwarded to a size adapter 222. An optional delay determiner 224 may also be provided in the size controller 220 for determining or estimating a packet transmission delay for received data packets. This delay value, or a variance between an actual delay value and an estimated delay value, may be forwarded to the size adapter 222. This size adapter 222 then adapts or changes the size of the playout buffer based on the talk burst length and possible also on the transmission delay value and/or other input information.

The units 222, 224, 240 and 250 of the size controller 220 may be provided as software, hardware or a combination thereof. The units 222, 224, 240 and 250 may be implemented together in the size controller 220. Alternatively, a distributed implementation is also possible with some units provided elsewhere in the PoC client or user equipment.

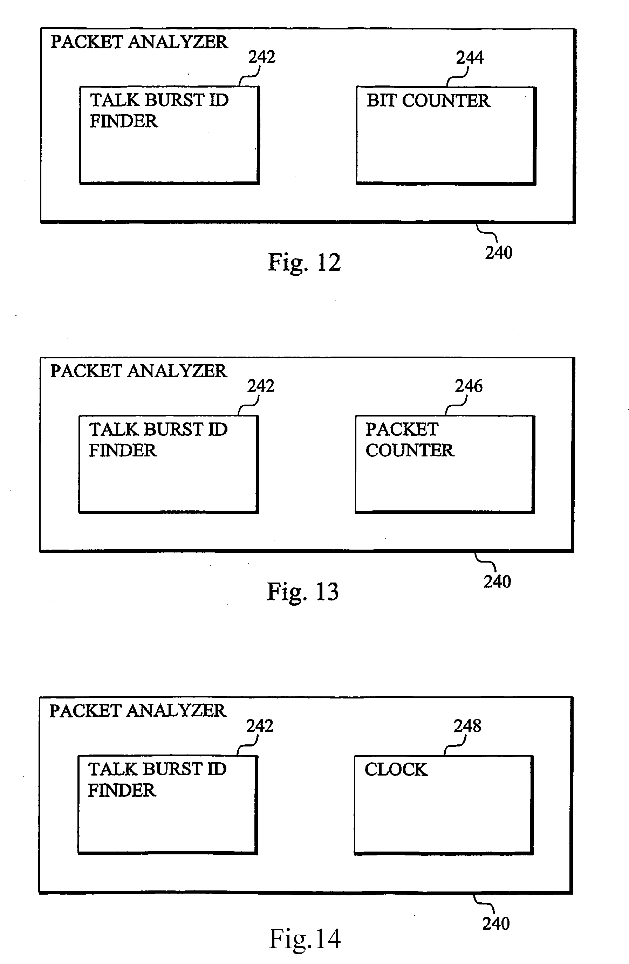

Fig. 12 is a schematic block diagram illustrating an embodiment of the packet analyzer 240 of Fig. 11 in more detail. The packet analyzer comprises means 242 for finding a talk burst start and stop identifier in the data packets. The analyzer 240 also comprises a bit counter 244 configured for counting the number of bits in the received data packets between a start identifier and a stop identifier. This information of the number of bits is then forwarded to the size controller for use in determining the talk burst length.

Fig. 13 is a schematic block diagram illustrating another embodiment of the packet analyzer 240 of Fig. 11 in more detail. The analyzer 240 includes an identifier finder 242 as was described for the embodiment illustrated in Fig. 12. Furthermore, a packet or frame counter 246 is provided in the packet analyzer 240 for counting the number of data packets between a start identifier and a stop identifier. This information of the number of packets is then forwarded to the size controller for use in determining the talk burst length.

Fig. 14 is a schematic block diagram illustrating yet another embodiment of the packet analyzer 240 of Fig. 11 in more detail. The analyzer 240 includes an identifier finder 242 as was described for the embodiment illustrated in Fig. 12. In addition, a clock 248 is provided in the packet analyzer 240 for determining the total release time from releasing a data packet including the talk burst start identifier from the playout buffer to releasing a data packet including the talk burst stop identifier from the buffer. Information of this total time is then forwarded to the size controller for use in determining the talk burst length.

The units 242 and 244, 246 or 248 of the packet analyzer 240 of Figs. 12-14 may be provided as software, hardware or a combination thereof. The units 242 and 244, 242 and 246 or 242 and 248 may be implemented together in the packet analyzer 240. Alternatively, a distributed implementation is also possible with one of the unit provided elsewhere in the PBS controller, PoC client or user equipment. It may possible for a design of the PoC client or packet analyzer to include several of the units 244, 246 and/or 248 in addition to the talk burst identifier finder 242. In such a case, there may be choice in the form of representation of the talk burst length (number of bits, number of packets or time units).

Fig. 15 is a schematic block diagram illustrating an embodiment of the length determiner 250 of Fig 11 in more detail. The length determiner 250 preferably includes an averaging functionality 252 for calculating an average talk burst length. Means 254 for dynamically setting or determining the number (M) of talk burst lengths to be included in the averaging is also provided in the length determiner 250. This means 254 is preferably adapted for determining the value M based on the talk burst length and/or some other input information or parameter value, e.g. received from the network operator. Means 256 for determining weights to be used for the talk burst lengths in the averaging is also preferably provided in the length determiner 250. The length determiner 250 preferably also comprises, or has access, to a storage 258 comprising weight values (ki), the value of M parameter and previously determined talk burst length values used for the averaging. Alternatively, this storage 258 may be provided elsewhere in the PoC client or the user equipment.

The units 252, 254 and 256 of the length determiner 250 may be provided as software, hardware or a combination thereof. The units 252, 254, 256 and 258 may be implemented together in the length determiner 250. Alternatively, a distributed implementation is also possible with some units provided elsewhere in the PBS controller, PoC client or user equipment.

It will be understood a person skilled in the art that various modifications and changes may be made to the present invention without departure from the scope thereof, which is defined by the appended claims.

REFERENCES

[1] US Patent No. 6,452,950 B1 of Telefonaktiebolaget LM Ericsson

[2] US Patent Application No. 2002/0007429 A1 of P Boulandet, J-M Zuan, R Querelle and P Burger

[3] K Fujimoto, S Ata and M Murata, "Adaptive Playout Buffer Algorithm for Enhancing Perceived Quality of Streaming Applications", to appear in Telecommunication Systems, January 2004.

**Claims**

1. User equipment (100) in a communications system (1), said user equipment (100) comprising means for receiving (110) data packets comprising bursty audio data over said communications system, said user equipment further comprising a size variable playout buffer (120) configured for temporarily storing said data packets comprising means for analyzing (240) information associated with said data packets for determining the audio burst length, and the user equipment (100) being **characterized by**:

   - means for adapting (222) the playout buffer size based on the determined audio burst length.

2. The user equipment according to claim 1, further comprising:

   - means for analyzing (240) information associated with said packets; and
   - means for determining (250) said audio burst length based on said analyzed information.

3. The user equipment according to claim 2, wherein said analyzing means (240) comprises means for determining (244) a number of bits in said data packets from an audio burst start identifier to an audio burst stop identifier, and said length determining means (250) is configured for determining said audio burst length based on said determined number of bits.

4. The user equipment according to claim 2, wherein said analyzing means (240) comprises means for calculating (246) a number of data packets received by said receiving means (110) from a first data packet comprising an audio burst start identifier to a second data packet comprising an audio burst stop identifier, and said length determining means (250) is configured for determining said audio burst length based on said calculated number of data packets.

5. The user equipment according to claim 2, wherein said analyzing means (240) comprises means for determining (248) a total releasing time comprising a time of releasing a data packet comprising an audio burst start identifier from said playout buffer (120) to a time of releasing a data packet comprising an audio burst stop identifier from said playout buffer (120), and said length determining means (250) is configured for determining said audio burst length based on said determined total releasing time.

6. The user equipment according to any of the claims 1 to 5, further comprising means for determining (252) an average length of multiple audio bursts, wherein said size adapting means (222) is configured for determining said playout buffer size based on said determined average length.

7. The user equipment according to claim 6, wherein said average length determining means (252) is configured for determining a weighted average length of said multiple audio bursts.

8. The user equipment according to claim 6 or 7, further comprising means for determining (254) a number of audio bursts that are to be used by said average length determining means (252) for said average length determination based on the audio burst length.

9. The user equipment according to any of the claims 1 to 8, wherein said size adapting means (222) is configured for setting said playout buffer size at a first size if said audio burst length is according to a first length value and setting said playout buffer size at a second relatively larger size if said audio burst length is larger than said first length value.

10. The user equipment according to any of the claims 1 to 9, further comprising a client (200) configured for supporting Push to talk over Cellular (PoC) services in a packed based radio communications system (1), and said size adapting means (222) and said playout buffer (120) are configured in said PoC client (200).

11. A buffer controller (220) for an associated playout buffer (120) that is configured for temporarily storing data packets comprising bursty audio data, said controller (220) comprising - means for analyzing (240) information associated with said data packets for determining the audio burst length; and the buffer controller (220) being **characterized by**:

    - means for adapting (222) said size of said playout buffer (120) based on said determined audio burst length.

12. The controller according to claim 11, wherein said analyzing means (240) comprises means for determining (244) a number of bits in said data packets from an audio burst start identifier to an audio burst stop identifier, and said controller (220) comprises means for determining (250) said audio burst length based on said determined number of bits.

13. The controller according to claim 11, wherein said analyzing means (240) comprises means for calculating (246) a number of data packets stored in said playout buffer (120) from a first data packet comprising an audio burst start identifier to a second data packet comprising an audio burst stop identifier, and said controller (220) comprises means for determining (250) said audio burst length based on said calculated number of data packets.

14. The controller according to claim 11, wherein said analyzing means (240) comprises means for determining (248) a total releasing time that comprises a time of releasing a data packet comprising an audio burst start identifier from said playout buffer (120) to a time of releasing a data packet comprising an audio burst stop identifier from said playout buffer (120), and said controller (220) comprises means for determining (250) said audio burst length based on said determined total releasing time.

15. The controller according to any of the claims 11 to 14, further comprising means for determining (252) an average length of multiple audio bursts, wherein said size adapting means (222) is configured for determining said playout buffer size based on said determined average length.

16. The controller according to claim 15, wherein said average length determining means (252) is configured for determining a weighted average length of said multiple audio bursts.

17. The controller according to claim 15 or 16, further comprising means for determining (254) a number of audio bursts that are to be used by said average length determining means (252) for said average length determination based on the audio burst length.

18. The controller according to any of the claims 11 to 17, wherein said size adapting means (222) is configured for setting said playout buffer size at a first size if said audio burst length is according to a first length value and setting said playout buffer size at a second relatively larger size if said audio burst length is larger than said first length value.

19. The controller according to any of the claims 11 to 18, wherein said buffer controller (220) and said associated playout buffer (120) are provided in a client (200) configured for supporting Push to talk over Cellular (PoC) services in user equipment (100) in a packet based radio communications system (1).

20. A method of controlling a playout buffer (120) that temporary stores data packets comprising bursty audio data received over a communications system (1), said method being **characterized by** the steps of:

- analyzing information associated with said data packets for determining the audio burst length; and
- adapting said size of said playout buffer (120) based on said determined audio burst length.

21. The method according to claim 20, wherein said length determining step comprises the step of determining a number of bits in said data packets from an audio burst start identifier to an audio burst stop identifier.

22. The method according to claim 20, wherein said length determining step comprises the step of calculating a number of received data packets from a first data packet comprising an audio burst start identifier to a second data packet comprising an audio burst stop identifier.

23. The method according to claim 20, wherein said length determining step comprises the step of determining a total releasing time comprising a time of releasing a data packet comprising an audio burst start identifier from said playout buffer (120) to a time of releasing a data packet comprising an audio burst stop identifier from said playout buffer (120).

24. The method according to any of the claims 20 to 23, further comprising the step of determining an average length of multiple audio bursts, wherein said size adapting step comprises the step of adapting said playout buffer size based on said determined average length.

25. The method according to claim 24, wherein said average length determining step comprises the step of determining a weighted average length of said multiple audio bursts.

26. The method according to claim 25, wherein a weight for a first audio burst is larger than a weight for a second audio burst, where the audio data of said second audio burst being received at said playout buffer (120) at an earlier instance than the audio data of said first audio burst.

27. The method according to any of the claims 24 to 26, further comprising the step of determining a number of audio bursts that are to be included in said average length determination based on the audio burst length.

28. The method according to any of the claims 20 to 27, wherein said playout buffer size is set at a first size if said determined audio burst length is according to a first length value and said playout buffer size is set at a second relatively larger size if said determined audio burst length is larger than said first length value.

29. A communications system (1) comprising a transmitting node (100-1) transmitting data packets comprising bursty audio data and a receiving node (100-2; 100-3; 100-4 ; 100-5) adapted for receiving said transmitted data packets, the communications system (1) further comprising a size variable playout buffer (120) configured for temporarily storing said packets and for analyzing (240) information associated with said data packets for determining the audio burst length; and the communication system (1) being **characterized by**

- means for adapting (222) the playout buffer size based on the determined audio burst length.

30. The system according to claim 29, wherein said transmitting node (100-1) comprises means for introducing, into data packets, an audio burst start identifier and an audio burst stop identifier, and said receiving node (100-2; 100-3 ; 100-4 ; 100-5) comprises means for determining (250) said audio burst length based on said audio burst start identifier and said audio burst stop identifier.

31. The system according to claim 29 or 30, wherein said communications system (1) is a packet based radio communications system supporting Push to talk over Cellular (PoC) services, said transmitting node (100-1) is first user equipment comprising a first PoC client and said receiving node (100-2; 100- 3; 100-4; 100-5) is second user equipment comprising a second PoC client (200), said size adapting means (222) and said playout buffer (120) being provided in said second PoC client (200).

**Patentansprüche**

1. Benutzerausrüstung (100) in einem Kommunikationssystem (1), die Benutzerausrüstung (100) Mittel zum Empfangen (110) von Datenpaketen, die burstartige Audiodaten umfassen, über das Kommunikationssystem umfassend, die Benutzerausrüstung weiter einen in der Größe variablen Playout-Puffer (120) umfassend, der zum temporären Speichern der Datenpakete konfiguriert ist, Mittel zum Analysieren (240) von Informationen, die mit den Datenpaketen assoziiert sind, zum Bestimmen der Audioburstlänge umfassend, und die Benutzerausrüstung (100) **gekennzeichnet durch**:

   - Mittel zum Anpassen (222) der Größe des Playout-Puffers auf der Basis der bestimmten Audioburstlänge.

2. Benutzerausrüstung nach Anspruch 1, weiter umfassend:

   - Mittel zum Analysieren (240) von Informationen, die mit den Paketen assoziiert sind;
   und
   - Mittel zum Bestimmen (250) der Audioburstlänge auf der Basis der analysierten Informationen.

3. Benutzerausrüstung nach Anspruch 2, wobei das Analysemittel (240) Mittel zum Bestimmen (244) einer Zahl von Bits in den Datenpaketen von einer Audioburst-Startkennzeichnung zu einer Audioburst-Stoppkennzeichnung umfasst und das Längenbestimmungsmittel (250) zum Bestimmen der Audioburstlänge auf der Basis der bestimmten Zahl von Bits konfiguriert ist.

4. Benutzerausrüstung nach Anspruch 2, wobei das Analysemittel (240) Mittel zum Berechnen (246) einer Zahl von Datenpaketen, die von dem Empfangsmittel (110) empfangen wurden, von einem ersten Datenpaket, das eine Audioburst-Startkennzeichnung umfasst, bis zu einem zweiten Datenpaket, das eine Audioburst-Stoppkennzeichnung umfasst, umfasst und das Längenbestimmungsmittel (250) zum Bestimmen der Audioburstlänge auf der Basis der berechneten Zahl von Datenpaketen konfiguriert ist.

5. Benutzerausrüstung nach Anspruch 2, wobei das Analysemittel (240) Mittel zum Bestimmen (248) einer Gesamtfreigabezeit umfasst, die eine Zeit der Freigabe eines Datenpakets, das eine Audioburst-Startkennzeichnung umfasst, aus dem Playout-Puffer (120) bis zu einer Zeit der Freigabe eines Datenpakets, das eine Audioburst-Stoppkennzeichnung umfasst, aus dem Playout-Puffer (120) umfasst, und das Längenbestimmungsmittel (250) zum Bestimmen der Audioburstlänge auf der Basis der bestimmten Gesamtfreigabezeit konfiguriert ist.

6. Benutzerausrüstung nach einem der Ansprüche 1 bis 5, weiter Mittel zum Bestimmen (252) einer Durchschnittslänge von mehreren Audiobursts umfassend, wobei das Größenanpassungsmittel (222) zum Bestimmen der Größe des Playout-Puffers auf der Basis der bestimmten Durchschnittslänge konfiguriert ist.

7. Benutzerausrüstung nach Anspruch 6, wobei das Durchschnittslängen-Bestimmungsmittel (252) zum Bestimmen einer gewichteten Durchschnittslänge der mehreren Audiobursts konfiguriert ist.

8. Benutzerausrüstung nach Anspruch 6 oder 7, weiter Mittel zum Bestimmen (254) einer Zahl von Audiobursts umfassend, die von dem Durchschnittslängen-Bestimmungsmittel (252) für die Bestimmung der Durchschnittslänge auf der Basis der Audioburstlänge zu verwenden sind.

9. Benutzerausrüstung nach einem der Ansprüche 1 bis 8, wobei das Größenanpassungsmittel (222) zum Einstellen der Größe des Playout-Puffers auf eine erste Größe konfiguriert ist, wenn die Audioburstlänge einem ersten Längenwert entspricht, und zum Einstellen der Größe des Playout-Puffers auf eine zweite, relativ größere Größe, wenn die Audioburstlänge größer als der erste Längenwert ist.

10. Benutzerausrüstung nach einem der Ansprüche 1 bis 9, weiter einen Client (200) umfassend, der konfiguriert ist, um Push to talk over Cellular (PoC)-Dienste in einem paketbasierten Funkkommunikationssystem (1) zu unterstützen, und das Größenanpassungsmittel (222) und der Playout-Puffer (120) sind in dem PoC-Client (200) konfiguriert.

11. Puffersteuerung (220) für einen assoziierten Playout-Puffer (120), der zum temporären Speichern von Datenpaketen, die burstartige Audiodaten umfassen, konfiguriert ist, die Steuerung (220) umfassend:

- Mittel zum Analysieren (240) von Informationen, die mit den Datenpaketen assoziiert sind, zum Bestimmen der Audioburstlänge; und die Puffersteuerung (220) **gekennzeichnet durch**:
- Mittel zum Anpassen (222) der Größe des Playout-Puffers (120) auf der Basis der bestimmten Audioburstlänge.

12. Steuerung nach Anspruch 11, wobei das Analysemittel (240) Mittel zum Bestimmen (244) einer Zahl von Bits in den Datenpaketen von einer Audioburst-Startkennzeichnung zu einer Audioburst-Stoppkennzeichnung umfasst und die Steuerung (220) Mittel zum Bestimmen (250) der Audioburstlänge auf der Basis der bestimmten Zahl von Bits umfasst.

13. Steuerung nach Anspruch 11, wobei das Analysemittel (240) Mittel zum Berechnen (246) einer Zahl von Datenpaketen, die in dem Playout-Puffer (120) gespeichert sind, von einem ersten Datenpaket, das eine Audioburst-Startkennzeichnung umfasst, zu einem zweiten Datenpaket, das eine Audioburst-Stoppkennzeichnung umfasst, umfasst und die Steuerung (220) Mittel zum Bestimmen (250) der Audioburstlänge auf der Basis der berechneten Zahl von Datenpaketen umfasst.

14. Steuerung nach Anspruch 11, wobei das Analysemittel (240) Mittel zum Bestimmen (248) einer Gesamtfreigabezeit umfasst, die eine Zeit der Freigabe eines Datenpakets, das eine Audioburst-Startkennzeichnung umfasst, aus dem Playout-Puffer (120) bis zu einer Zeit der Freigabe eines Datenpakets, das eine Audioburst-Stoppkennzeichnung umfasst, aus dem Playout-Puffer (120) umfasst, und die Steuerung (220) Mittel zum Bestimmen (250) der Audioburstlänge auf der Basis der bestimmten Gesamtfreigabezeit umfasst.

15. Steuerung nach einem der Ansprüche 11 bis 14, weiter Mittel zum Bestimmen (252) einer Durchschnittslänge von mehreren Audiobursts umfassend, wobei das Größenanpassungsmittel (222) zum Bestimmen der Größe des Playout-Puffers auf der Basis der bestimmten Durchschnittslänge konfiguriert ist.

16. Steuerung nach Anspruch 15, wobei das Durchschnittslängen-Bestimmungsmittel (252) zum Bestimmen einer gewichteten Durchschnittslänge der mehreren Audiobursts konfiguriert ist.

17. Steuerung nach Anspruch 15 oder 16, weiter Mittel zum Bestimmen (254) einer Zahl von Audiobursts umfassend, die von dem Durchschnittslängen-Bestimmungsmittel (252) für die Bestimmung der Durchschnittslänge auf der Basis der Audioburstlänge zu verwenden sind.

18. Steuerung nach einem der Ansprüche 11 bis 17, wobei das Größenanpassungsmittel (222) zum Einstellen der Größe des Playout-Puffers auf eine erste Größe konfiguriert ist, wenn die Audioburstlänge einem ersten Längenwert entspricht, und zum Einstellen der Größe des Playout-Puffers auf eine zweite, relativ größere Größe, wenn die Audioburstlänge größer als der erste Längenwert ist.

19. Steuerung nach einem der Ansprüche 11 bis 18, wobei die Puffersteuerung (220) und der assoziierte Playout-Puffer (120) in einem Client (200) bereitgestellt werden, der konfiguriert ist, um Push to talk over Cellular (PoC)-Dienste in Benutzerausrüstung (100) in einem paketbasierten Funkkommunikationssystem (1) zu unterstützen.

20. Verfahren zum Steuern eines Playout-Puffers (120), der temporär Datenpakete speichern, die burstartige Audiodaten umfassen, die über ein Kommunikationssystem (1) empfangen wurden, das Verfahren durch die folgenden Schritte **gekennzeichnet**:

- Analysieren von Informationen, die mit den Datenpaketen assoziiert sind, zum Bestimmen der Audioburstlänge; und
- Anpassen der Größe des Playout-Puffers (120) auf der Basis der bestimmten Audioburstlänge.

21. Verfahren nach Anspruch 20, wobei der Längenbestimmungsschritt den Schritt umfasst, eine Zahl von Bits in den Datenpaketen von einer Audioburst-Startkennzeichnung zu einer Audioburst-Stoppkennzeichnung zu bestimmen.

22. Verfahren nach Anspruch 20, wobei der Längenbestimmungsschritt den Schritt umfasst, eine Zahl von empfangenen Datenpaketen von einem ersten Datenpaket, das eine Audioburst-Startkennzeichnung umfasst, zu einem zweiten Datenpaket, das eine Audioburst-Stoppkennzeichnung umfasst, zu berechnen.

23. Verfahren nach Anspruch 20, wobei der Längenbestimmungsschritt den Schritt umfasst, eine Gesamtfreigabezeit zu bestimmen, die eine Zeit der Freigabe eines Datenpakets, das eine Audioburst-Startkennzeichnung umfasst, aus dem Playout-Puffer (120) bis zu einer Zeit der Freigabe eines Datenpakets, das eine Audioburst-Stoppkennzeichnung umfasst, aus dem Playout-Puffer (120) umfasst.

24. Verfahren nach einem der Ansprüche 20 bis 23, weiter den Schritt zum Bestimmen einer Durchschnittslänge von mehreren Audiobursts umfassend, wobei der Größenanpassungsschritt den Schritt zum Anpassen der Größe des Playout-Puffers auf der Basis der bestimmten Durchschnittslänge umfasst.

25. Verfahren nach Anspruch 24, wobei der Durchschnittslängen-Bestimmungsschritt den Schritt zum Bestimmen einer gewichteten Durchschnittslänge der mehreren Audiobursts umfasst.

26. Verfahren nach Anspruch 25, wobei ein Gewicht für einen ersten Audioburst größer als ein Gewicht für einen zweiten Audioburst ist, wobei die Audiodaten des zweiten Audiobursts in dem Playout-Puffer (120) zu einem früheren Zeitpunkt als die Audiodaten des ersten Audiobursts empfangen werden.

27. Verfahren nach einem der Ansprüche 24 bis 26, weiter den Schritt zum Bestimmen einer Zahl von Audiobursts umfassend, die in der Bestimmung der Durchschnittslänge auf der Basis der Audioburstlänge aufzunehmen sind.

28. Verfahren nach einem der Ansprüche 20 bis 27, wobei die Größe des Playout-Puffers auf eine erste Größe eingestellt wird, wenn die bestimmte Audioburstlänge einem ersten Längenwert entspricht, und die Größe des Playout-Puffers auf eine zweite, relativ größere Größe eingestellt wird, wenn die bestimmte Audioburstlänge größer als der erste Längenwert ist.

29. Kommunikationssystem (1), umfassend einen Übertragungsknoten (100-1), der Datenpakete überträgt, die burstartige Audiodaten umfassen, und einen Empfangsknoten (100-2; 100-3; 100-4; 100-5), der zum Empfangen der übertragenen Datenpakete angepasst ist, das Kommunikationssystem (1) weiter einen in der Größe variablen Playout-Puffer (120) umfassend, der zum temporären Speichern der Datenpakete und zum Analysieren (240) von Informationen, die mit den Datenpaketen assoziiert sind, zum Bestimmen der Audioburstlänge konfiguriert ist; und das Kommunikationssystem (1) **gekennzeichnet durch**:

- Mittel zum Anpassen (222) der Größe des Playout-Puffers auf der Basis der bestimmten Audioburstlänge.

30. System nach Anspruch 29, wobei der Übertragungsknoten (100-1) Mittel zum Einfügen einer Audioburst-Startkennzeichnung und einer Audioburst-Stoppkennzeichnung in Datenpakete umfasst und der Empfangsknoten (100-2; 100-3; 100-4; 100-5) Mittel zum Bestimmen (250) der Audioburstlänge auf der Basis der Audioburst-Startkennzeichnung und der Audioburst-Stoppkennzeichnung umfasst.

31. System nach Anspruch 29 oder 30, wobei das Kommunikationssystem (1) ein paketbasiertes Funkkommunikationssystem ist, das Push to talk over Cellular (PoC)-Dienste unterstützt, der Übertragungsknoten (100-1) eine erste Benutzerausrüstung ist, die einen ersten PoC-Client umfasst, und der Empfangsknoten (100-2; 100-3; 100-4; 100-5) eine zweite Benutzerausrüstung ist, die einen zweite PoC-Client (200) umfasst, wobei das Größenanpassungsmittel (222) und der Playout-Puffer (120) in dem zweiten PoC-Client (200) bereitgestellt werden.

**Revendications**

1. Équipement utilisateur (100) dans un système de communication (1), ledit équipement utilisateur (100) comportant un moyen pour recevoir (110) des paquets de données incluant des données audio en rafales sur ledit système de communication, ledit équipement utilisateur comportant en outre un tampon de reproduction de taille variable (120) configuré de manière à stocker temporairement lesdits paquets de données comportant un moyen pour analyser (240) des informations associées auxdits paquets de données pour déterminer la longueur de rafale audio, et l'équipement utilisateur (100) étant **caractérisé par** :

   - un moyen pour adapter (222) la taille de tampon de reproduction sur la base de la longueur déterminée de rafale audio.

2. Équipement utilisateur selon la revendication 1, comportant en outre :

   - un moyen pour analyser (240) des informations associées auxdits paquets ; et
   - un moyen pour déterminer (250) ladite longueur de rafale audio sur la base desdites informations analysées.

3. Équipement utilisateur selon la revendication 2, dans lequel ledit moyen d'analyse (240) comporte un moyen pour déterminer (244) un nombre de bits dans lesdits paquets de données, depuis un identifiant de début de rafale audio jusqu'à un identifiant d'arrêt de rafale audio, et ledit moyen de détermination de longueur (250) est configuré de manière à déterminer ladite longueur de rafale audio sur la base dudit nombre de bits déterminés.

4. Équipement utilisateur selon la revendication 2, dans lequel ledit moyen d'analyse (240) comporte un moyen pour calculer (246) un nombre de paquets de données reçus par ledit moyen de réception (110) depuis un premier paquet de données comportant un identifiant de début de rafale audio jusqu'à un second paquet de données comportant un identifiant d'arrêt de rafale audio, et ledit moyen de détermination de longueur (250) est configuré de manière à déterminer ladite longueur de rafale audio sur la base dudit nombre de paquets de données calculé.

5. Équipement utilisateur selon la revendication 2, dans lequel ledit moyen d'analyse (240) comporte un moyen pour déterminer (248) un temps de libération total, depuis un temps de libération d'un paquet de données comportant un identifiant de début de rafale audio dudit tampon de reproduction (120) jusqu'à un temps de libération d'un paquet de données comportant un identifiant d'arrêt de rafale audio dudit tampon de reproduction (120), et ledit moyen de détermination de longueur (250) est configuré de manière à déterminer ladite longueur de rafale audio sur la base dudit temps de libération total déterminé.

6. Équipement utilisateur selon l'une quelconque des revendications 1 à 5, comportant en outre un moyen pour déterminer (252) une longueur moyenne de multiples rafales audio, dans lequel ledit moyen d'adaptation de taille (222) est configuré de manière à déterminer ladite taille de tampon de reproduction sur la base de ladite longueur moyenne déterminée.

7. Équipement utilisateur selon la revendication 6, dans lequel ledit moyen de détermination de longueur moyenne (252) est configuré de manière à déterminer une longueur moyenne pondérée desdites multiples rafales audio.

8. Équipement utilisateur selon la revendication 6 ou 7, comportant en outre un moyen pour déterminer (254) un nombre de rafales audio qui doivent être utilisées par ledit moyen de détermination de longueur moyenne (252) pour ladite détermination de longueur moyenne sur la base de la longueur de rafale audio.

9. Équipement utilisateur selon l'une quelconque des revendications 1 à 8, dans lequel ledit moyen d'adaptation de taille (222) est configuré de manière à spécifier ladite taille de tampon de reproduction sur une première taille lorsque ladite longueur de rafale audio correspond à une première valeur de longueur, et à spécifier ladite taille de tampon de reproduction sur une seconde taille relativement plus importante lorsque ladite longueur de rafale audio est supérieure à ladite première valeur de longueur.

10. Équipement utilisateur selon l'une quelconque des revendications 1 à 9, comportant en outre un dispositif client (200) configuré de manière à prendre en charge des services Push to talk over Cellular (PoC) dans un système de communication radio à base de paquets (1), et ledit moyen d'adaptation de taille (222) et ledit tampon de reproduction (120) sont configurés dans ledit dispositif client PoC (200).

**11.** Contrôleur de tampon (220) pour un tampon de reproduction associé (120) lequel est configuré de manière à stocker temporairement des paquets de données comportant des données audio en rafales, ledit contrôleur (220) comportant :

   - un moyen pour analyser (240) des informations associées auxdits paquets de données en vue de déterminer la longueur de rafale audio ; et le contrôleur de tampon (220) étant **caractérisé par** :
   - un moyen pour adapter (222) ladite taille dudit tampon de reproduction (120) sur la base de ladite longueur déterminée de rafale audio.

**12.** Contrôleur selon la revendication 11, dans lequel ledit moyen d'analyse (240) comporte un moyen pour déterminer (244) un nombre de bits dans lesdits paquets de données depuis un identifiant de début de rafale audio jusqu'à un identifiant d'arrêt de rafale audio, et ledit contrôleur (220) comporte un moyen pour déterminer (250) ladite longueur de rafale audio sur la base dudit nombre de bits déterminés.

**13.** Contrôleur selon la revendication 11, dans lequel ledit moyen d'analyse (240) comporte un moyen pour calculer (246) un nombre de paquets de données stockés dans ledit tampon de reproduction (120) depuis un premier paquet de données comportant un identifiant de début de rafale audio jusqu'à un second paquet de données comportant un identifiant d'arrêt de rafale audio, et ledit contrôleur (220) comporte un moyen pour déterminer (250) ladite longueur de rafale audio sur la base dudit nombre de paquets de données calculé.

**14.** Contrôleur selon la revendication 11, dans lequel ledit moyen d'analyse (240) comporte un moyen pour déterminer (248) un temps de libération total lequel englobe un temps de libération d'un paquet de données comportant un identifiant de début de rafale audio dudit tampon de reproduction (120) allant jusqu'à un temps de libération d'un paquet de données comportant un identifiant d'arrêt de rafale audio dudit tampon de reproduction (120), et ledit contrôleur (220) comporte un moyen pour déterminer (250) ladite longueur de rafale audio sur la base dudit temps de libération total déterminé.

**15.** Contrôleur selon l'une quelconque des revendications 11 à 14, comportant en outre un moyen pour déterminer (252) une longueur moyenne de multiples rafales audio, dans lequel ledit moyen d'adaptation de taille (222) est configuré de manière à déterminer ladite taille de tampon de reproduction sur la base de ladite longueur moyenne déterminée.

**16.** Contrôleur selon la revendication 15, dans lequel ledit moyen de détermination de longueur moyenne (252) est configuré de manière à déterminer une longueur moyenne pondérée desdites multiples rafales audio.

**17.** Contrôleur selon la revendication 15 ou 16, comportant en outre un moyen pour déterminer (254) un nombre de rafales audio qui doivent être utilisées par ledit moyen de détermination de longueur moyenne (252) pour ladite détermination de longueur moyenne sur la base de la longueur de rafale audio.

**18.** Contrôleur selon l'une quelconque des revendications 11 à 17, dans lequel ledit moyen d'adaptation de taille (222) est configuré de manière à spécifier ladite taille de tampon de reproduction sur une première taille lorsque ladite longueur de rafale audio correspond à une première valeur de longueur, et à spécifier ladite taille de tampon de reproduction sur une seconde taille relativement plus importante lorsque ladite longueur de rafale audio est supérieure à ladite première valeur de longueur.

**19.** Contrôleur selon l'une quelconque des revendications 11 à 18, dans lequel ledit contrôleur de tampon (220) et ledit tampon de reproduction associé (120) sont délivrés dans un dispositif client (200) configuré de manière à prendre en charge des services Push to talk over Cellular (PoC) dans un équipement utilisateur (100) au sein d'un système de communication radio à base de paquets (1).

**20.** Procédé de commande d'un tampon de reproduction (120) lequel stocke de manière temporaire des paquets de données comportant des données audio en rafales reçues sur un système de communication (1), ledit procédé étant **caractérisé par** les étapes ci-dessous consistant à :

   - analyser des informations associées auxdits paquets de données en vue de déterminer la longueur de rafale audio ; et
   - adapter ladite taille dudit tampon de reproduction (120) sur la base de ladite longueur déterminée de rafale audio.

**21.** Procédé selon la revendication 20, dans lequel ladite étape de détermination de longueur comporte l'étape consistant à déterminer un nombre de bits dans lesdits paquets de données depuis un identifiant de début de rafale audio jusqu'à un identifiant d'arrêt de rafale audio.

**22.** Procédé selon la revendication 20, dans lequel ladite étape de détermination de longueur comporte l'étape consistant à calculer un nombre de paquets de données reçus depuis un premier paquet de données comportant un identifiant de début de rafale audio jusqu'à un second paquet de données comportant un identifiant d'arrêt de rafale audio.

**23.** Procédé selon la revendication 20, dans lequel ladite étape de détermination de longueur comporte l'étape consistant à déterminer un temps de libération total englobant un temps de libération d'un paquet de données comportant un identifiant de début de rafale audio dudit tampon de reproduction (120) allant jusqu'à un temps de libération d'un paquet de données comportant un identifiant d'arrêt de rafale audio dudit tampon de reproduction (120).

**24.** Procédé selon l'une quelconque des revendications 20 à 23, comportant en outre l'étape consistant à déterminer une longueur moyenne de multiples rafales audio, dans lequel ladite étape d'adaptation de taille comporte l'étape consistant à adapter ladite taille de tampon de reproduction sur la base de ladite longueur moyenne déterminée.

**25.** Procédé selon la revendication 24, dans lequel ladite étape de détermination de longueur moyenne comporte l'étape consistant à déterminer une longueur moyenne pondérée desdites multiples rafales audio.

**26.** Procédé selon la revendication 25, dans lequel une pondération d'une première rafale audio est supérieure à une pondération d'une seconde rafale audio, où les données audio de ladite seconde rafale audio sont reçues au niveau dudit tampon de reproduction (120) plus tôt dans le temps que les données audio de ladite première rafale audio.

**27.** Procédé selon l'une quelconque des revendications 24 à 26, comportant en outre l'étape consistant à déterminer un nombre de rafales audio qui doivent être incluses dans ladite détermination de longueur moyenne sur la base de la longueur de rafale audio.

**28.** Procédé selon l'une quelconque des revendications 20 à 27, dans lequel ladite taille de tampon de reproduction est spécifiée sur une première taille lorsque ladite longueur déterminée de rafale audio correspond à une première valeur de longueur et ladite taille de tampon de reproduction est spécifiée sur une seconde taille relativement plus importante lorsque ladite longueur déterminée de rafale audio est supérieure à ladite première valeur de longueur.

**29.** Système de communication (1) comportant un noeud de transmission (100-1) émettant des paquets de données comportant des données audio en rafales et un noeud de réception (100-2 ; 100-3 ; 100-4 ; 100-5) apte à recevoir lesdits paquets de données transmis, le système de communication (1) comportant en outre un tampon de reproduction de taille variable (120) configuré de manière à stocker temporairement lesdits paquets et à analyser (240) des informations associées auxdits paquets de données en vue de déterminer la longueur de rafale audio ; et le système de communication (1) est **caractérisé par** :

   - un moyen pour adapter (222) la taille de tampon de reproduction sur la base de la longueur déterminée de rafale audio.

**30.** Système selon la revendication 29, dans lequel ledit noeud de transmission (100-1) comporte un moyen pour intégrer, dans des paquets de données, un identifiant de début de rafale audio et un identifiant d'arrêt de rafale audio, et ledit noeud de réception (100-2 ; 100-3 ; 100-4 ; 100-5) comporte un moyen pour déterminer (250) ladite longueur de rafale audio sur la base dudit identifiant de début de rafale audio et dudit identifiant d'arrêt de rafale audio.

**31.** Système selon la revendication 29 ou 30, dans lequel ledit système de communication (1) est un système de communication radio à base de paquets prenant en charge des services Push to talk over Cellular (PoC), ledit noeud de transmission (100-1) est le premier équipement utilisateur comportant un premier dispositif client PoC et ledit noeud de réception (100-2 ; 100- 3 ; 100-4 ; 100-5) est le second équipement utilisateur comportant un second dispositif client PoC (200), ledit moyen d'adaptation de taille (222) et ledit tampon de reproduction (120) étant délivrés au sein dudit second dispositif client PoC (200).

Fig. 1

START

S1 RECEIVE PACKETS

S2 DETERMINE AUDIO BURST LENGTH

S3 ADAPT PLAYOUT BUFFER SIZE

STOP

Fig. 2

FROM STEP S1

S10 IDENTIFY TALK BURST START ID

S11 COUNT BITS

S12 IDENTIFY TALK BURST STOP ID

TO STEP S2

Fig. 3

EP 1 683 305 B1

FROM STEP S1

S30 — RELEASE PACKETS

S31 — IDENTIFY TALK BURST START ID

S32 — START CLOCK

S33 — IDENTIFY TALK BURST STOP ID

S34 — STOP CLOCK

TO STEP S2

Fig. 5

FROM STEP S1

S20 — IDENTIFY TALK BURST START ID

S21 — COUNT PACKETS

S22 — IDENTIFY TALK BURST STOP ID

TO STEP S2

Fig. 4

FROM STEP S2

DETERMINE M — S40

DETERMINE $k_i$ — S41

DETERMINE AVERAGED TALK BURST LENGTH — S42

TO STEP S3

Fig. 7

Fig. 6

PLAYOUT BUFFER
SIZE

500

520

510

530

TALK BURST
LENGTH

Fig. 8

200

PoC CLIENT

PB MANAGER

230

I/O

210

PBS
CONTROLLER

220

PLAYOUT
BUFFER

120

Fig. 10

100

110

I/O

~150

260

PoC CLIENT          120          200

ADAPTIVE PLAYOUT
BUFFER

RENDERING UNIT          130

IDENTITY MODULE

APPLICATION          145          140
ENVIRONEMENT

~160

Fig.9

EP 1 683 305 B1

PBS CONTROLLER

| SIZE ADAPTER | DELAY DETERMINER | PACKET ANALYZER | LENGTH DETERMINER |

222  224  240  250

~220

Fig. 11

LENGHT DETERMINER

AVERAGE FUNCTION

k$i$ SETTER

M SETTER

STORAGE

256

252

254

258

~250

Fig. 15

PACKET ANALYZER

242

TALK BURST ID
FINDER

244

BIT COUNTER

240

Fig. 12

PACKET ANALYZER

242

TALK BURST ID
FINDER

246

PACKET
COUNTER

240

Fig. 13

PACKET ANALYZER

242

TALK BURST ID
FINDER

248

CLOCK

240

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6452950 B
- US 20020007429 A
- US 6452950 B1

- US 20020007429 A1, P Boulandet, J-M Zuan, R Querelle and P Burger

**Non-patent literature cited in the description**

- **K Fujimoto ; S Ata ; M Murata.** Adaptive Playout Buffer Algorithm for Enhancing Perceived Quality of Streaming Applications. *Telecommunication Systems,* January 2004